# EUROPEAN PATENT APPLICATION

(11) **EP 4 317 762 A1**
(43) Date of publication of application: **07.02.2024**
(21) Application number: 22188464.6
(22) Date of filing: 03.08.2022
(51) Int. Cl.: F17C 1/00

(54) **TANK AND SYSTEM FOR STORING COMPRESSED GAS, E.G. COMPRESSED HYDROGEN, VEHICLE AND SYSTEM AND METHOD FOR SUPPLYING GAS TO A TANK**

(71) Applicant: L 2 Consultancy B.V., 3722 BR Bilthoven (NL)
(72) Inventor: Van Lookeren Campagne, Constant Johan, 3722 BR Bilthoven (NL)
(74) Representative: Meissner Bolte Partnerschaft mbB

(57) **Abstract**

A tank for storing compressed gas, e.g. compressed hydrogen, comprises a vessel (2;11) having an interior closed by a vessel wall (3;12) for containing gas inside the vessel (2;11); a barrier (7;16), arranged in the interior of the vessel (2;11) and separating gas in a first compartment (8;17) in the interior of the vessel (2;11) from gas in a second compartment (9;18) formed between the barrier (7;16) and an interior surface of the vessel wall (3;12); at least one first connection device (5;14;27), connectable to a system (22;24) external to the tank, for exchanging gas between that system (22;24) and the first compartment (8;17); and at least one second connection device (6;15;28), connectable to a system (22;24) external to the tank, for exchanging gas between that system (22;24) and the second compartment (9;18). The barrier (7;16) is variable in shape through movement of at least part of the barrier (7;16) towards the interior surface of the vessel wall (3;12) on supply of gas to the first compartment (8;17) in combination with a discharge of gas from the second compartment (9;18).

## Description

The invention relates to tank for storing compressed gas, e.g. compressed hydrogen, comprising:
a vessel having an interior closed by a vessel wall for containing gas inside the vessel;
a barrier, arranged in the interior of the vessel and separating gas in a first compartment in the interior of the vessel from gas in a second compartment formed between the barrier and an interior surface of the vessel wall;
at least one first connection device, connectable to a system external to the tank, for exchanging gas between that system and the first compartment; and
at least one second connection device, connectable to a system external to the tank, for exchanging gas between that system and the second compartment.

The invention also relates to a system for supplying gas to a tank.

The invention also relates to a system for storing a first compressed gas, e.g. compressed hydrogen.

The invention also relates to a vehicle.

The invention also relates to a method of supplying gas to a tank.

CN 112212205 A discloses an anti-fatigue high-pressure container for hydrogen refuelling stations comprising an inner container and an outer container sleeved outside the inner container. The inner container is a large-volume seamless container made of austenite stainless steel. The gas cylinder is filled with high-pressure hydrogen. The outer container is a large-volume seamless gas cylinder made of high-strength steel seamless steel pipes and is filled with balanced gas nitrogen. Through effective regulation of the balanced gas pressure, the working stress level of the inner container is reduced. The inner and outer containers are filled at the same time during filling. The pressure in the outer container cavity between the containers is unchanged during operation. A problem of the known tank is that, when this tank is emptied relatively completely of hydrogen and relatively quickly refilled, as when used on board a vehicle, the inner tank will still suffer from fatigue.

DE 10 2020 123 102 A1 discloses a tank for storing hydrogen comprising an outer tank and an inner tank. The inner tank is arranged inside the outer tank. The inner tank is adapted to be filled with hydrogen. The outer tank is adapted to be filled with helium or another noble gas and adapted to be held at a higher pressure than the inner tank. The outer tank is connected by a first conduit to a first pressure measurement device as well as a first compression device, which in turn is connected to a storage tank. The inner tank is connected by a second conduit to a second pressure measurement device as well as a second compression device. A control device is arranged to set the pressure measured by the first pressure measurement device in the outer tank in such a way that this pressure is higher by a pre-determined amount than the pressure measured by the second pressure measurement device in the inner tank. A problem with this method is that the method results in the pressure in the outer tank increasing as the inner tank is filled with hydrogen. Thus, the outer tank can suffer fatigue. More particular, since the outer tank is made of carbon fibre-reinforced composite material, delamination can occur over time, shortening the lifetime of the tank.

It is an object of the invention to provide a tank, systems, vehicle and method of the types mentioned above in the opening paragraphs that allow the tank to be filled with and emptied of compressed gas at high pressures relatively completely relatively often without shortening the lifetime of the tank.

This object is achieved according to first aspect by the tank according to the invention, which is characterised in that the barrier is variable in shape through movement of at least part of the barrier towards the interior surface of the vessel wall on supply of gas to the first compartment in combination with a discharge of gas from the second compartment.

The tank is provided with at least one first connection device, connectable to a system external to the tank, for exchanging gas between that system and the first compartment, and at least one second connection device, connectable to a system external to the tank, for exchanging gas between that system and the second compartment. These separate connections allow compressed gas such as compressed hydrogen to be delivered to the first compartment whilst a different gas is discharged from the second compartment and vice versa. The barrier ensures that the pressure differential between the first and second compartment is negligible, depending on the degree of elastic deformation of the barrier. Thus, the pressure in the vessel interior can be kept constant during filling and emptying of the tank with hydrogen or another type of compressed gas at high pressure (e.g. above 35 or 38 MPa or even above 65 MPa). The risk of delamination, or fatigue by a different mechanism, of the vessel wall is reduced. Because the barrier is variable in shape through movement of at least part of the barrier towards the interior surface of the vessel wall on supply of gas to the first compartment in combination with a discharge of gas from the second compartment, the shape of the barrier will conform more closely to that of the vessel wall when the first compartment is filled with gas and the second compartment is emptied, e.g. emptied at the same time. The volume of the first compartment increases and that of the second compartment decreases. The pressure in both compartments, and thus the load of the vessel wall, can remain the same to within at least a certain range (e.g. less than 5 % or even 1 % of the pressure when both compartments are of equal volume). The change of shape to conform more closely to that of the interior surface of the vessel wall allows more of the interior volume of the vessel wall to be occupied by the first compartment. The change in shape is such as to lessen the conformance when gas is discharged from the first compartment and the second compartment is filled. The variability in shape may be due to the barrier being flexible and/or due to elastic deformation of the barrier.

In any embodiment, the first compartment may be capable of occupying at least 50 % of the volume of the interior of the vessel.

The vessel wall will generally be the outer wall of the tank, but may be reinforced by further shell parts applied to the exterior of the vessel wall. The interior of the vessel can be occupied essentially completely (but for the barrier, one or more bosses, optionally fittings and means for connecting the barrier to the vessel) by the gases.

In an embodiment, at least part of the movable part of the barrier is movable into contact with the interior surface of the vessel wall.

This allows for an even higher degree of emptying of the second compartment and thus filling of the first compartment.

In an embodiment, the barrier is movable into contact with the interior surface of the vessel wall over at least 50 % of the interior surface of the vessel wall.

In embodiments in which the barrier divides the interior of the vessel into two equally-sized compartments, this embodiment allows the volume of one of them to double and of the other to decrease essentially to zero. This is the case even if the barrier does not stretch appreciably. If the barrier is distensible, i.e. able to stretch, this embodiment allows the volume of at least one of the compartments to increase to close to the entire interior volume of the vessel without a large degree of elastic, and potentially even irreversible, deformation of the barrier.

In an embodiment of the tank the first compartment is enclosed by the barrier.

The barrier is thus essentially bag-shaped. In this embodiment, the first compartment is particularly suited for storing hydrogen, whereas the second compartment can be used to store a displacement gas or mixture of gases. Nitrogen as the main or only displacement gas is a suitable choice. The barrier moves to decrease the pressure differential between the first and second compartments. Thus, permeation of hydrogen through the barrier is negligible. This keeps the hydrogen away from the vessel wall. Hydrogen permeation into or even through the vessel wall is avoided. Furthermore, only the throat of the bag-shaped barrier need be fixed in position relative to the vessel. The remainder is relatively free to move to equalise the pressures in the first and second compartments even if the barrier stretches little.

In a particular example of this embodiment, the at least one first connection device comprises a fitting extending through the vessel wall and connected to the barrier at a throat of the barrier.

The first compartment inside the barrier can be filled and emptied relatively easily in this embodiment. The throat is at the same time held in place. The fitting may be arranged in a boss. A boss forms an opening in the vessel wall in which a closure is attached, in this case one comprising at least the fitting to allow gas to flow into and out of the first compartment. The same or a further fitting provides for a separate flow connection to the second compartment and may be arranged in the same or a further boss.

In an embodiment of the tank, the barrier is distensible.

Thus, it is easier for the barrier to have a wide range of movement to allow for nearly full use of the volume inside the vessel to store hydrogen or another gas at relatively high pressure. The pressure difference between the gas in the first and second compartments will vary with the degree of elastic deformation of the barrier, but it is still possible to keep the pressure acting on the interior of the vessel wall within a certain range of a certain value, or even at a certain value, at all times. This is particularly the case when the first compartment is enclosed by the barrier and the pressure in the second compartment is regulated to remain at the certain value.

In an embodiment of the tank, the barrier comprises at least a layer comprising a metal foil.

The metal foil may be a metal coating on a substrate made of a different material. Metal, e.g. steel or aluminium, provides a good barrier to hydrogen.

In an embodiment, the barrier comprises at least a layer of polyester film, e.g. a layer of biaxially-oriented polyethylene terephthalate film.

In this embodiment, the barrier is relatively strong, yet variable in shape.

In an embodiment of the tank, the vessel wall comprises at least one fibre-reinforced composite layer.

The tank can therefore be relatively light for the storage volume and burst pressure provided, compared, for example, to steel tanks. The barrier helps prevent delamination due to permeation at high pressure (e.g. above 35 or 38 MPa).

The fibre may comprise carbon fibre.

In an example of any embodiment in which the vessel wall comprises at least one fibre-reinforced composite layer, the fibre is embedded in a thermoplastic matrix, e.g. comprising at least one of nylon and polycaprolactam.

This material has good compatibility with hydrogen, is relatively economical and provides relatively high burst pressures for a given weight.

In an example of any embodiment of the tank in which the vessel wall comprises at least one fibre-reinforced composite layer, the fibre comprises continuous fibre.

The fibre has an aspect ratio of at least 500. This embodiment provides a high burst pressure.

In an embodiment, the vessel wall comprises at least one layer of wound tape.

In this embodiment, the vessel can be strengthened in particular directions by laying the tape on a mandrel in an appropriate direction. The vessel may, for example, be cylindrical or barrel-shaped, with a layer in which the tape is wound in hoops.

In an embodiment, the vessel wall comprises an interior liner, e.g. a liner forming the interior surface of the vessel wall.

The liner can be selected to provide a barrier to hydrogen or gas in general. An outer layer, e.g. a fibre composite layer can be selected for strength. Part or all of the liner may be moulded, e.g. blow-moulded, extrusion moulded or injection-moulded. Where the liner is made of multiple parts, these may be welded together. In the process of manufacturing the vessel, the liner may be used as a mandrel on which to form one or more layers of fibre composite material, e.g. in the form of wound tape.

In an example of any embodiment in which the vessel wall comprises an interior liner, e.g. a liner forming the interior surface of the vessel wall, the liner is made of at least one material, and the at least one material comprises at least one of nylon and polycaprolactam.

This embodiment provides an effective barrier to hydrogen. The liner may comprise a further material, e.g. a metal coating or laminated metal foil, to improve the barrier properties further.

In an embodiment, the vessel has an elongated shape.

This embodiment is relatively easy to handle, e.g. as compared with approximately spherical tanks. Furthermore, multiple such tanks can be arranged relatively efficiently, e.g. as a cluster on a trailer. To provide the elongated shape, a main section of the vessel wall may be cylindrical. Due to the ability to keep the load on the vessel wall relatively constant, the elongated shape has a low tendency to deform between a rounder shape and the original elongated shape. This type of deformation would otherwise lead to compression of the vessel wall at the interior surface and the formation of cracks at the exterior surface of the vessel wall, in particular if the wall is made of carbon-fibre composite material. The barrier extends over at least a majority of the length of the vessel. In an embodiment in which the barrier sub-divides the interior of the vessel, a gas-tight connection between the edge of the barrier and the vessel wall may be provided along at least the majority of the circumference of the barrier. The barrier may be arranged to sub-divide the interior of the vessel into first and second compartments of at least approximately equal volume.

In an example of any embodiment in which the vessel has an elongated shape, the vessel wall is dome-shaped, e.g. hemi-spherical, at opposite longitudinal ends of the vessel.

This embodiment is relatively strong at the transition between the central section and the axial end sections. The dome shape may be interrupted by a boss at one or both axial ends. In an example, the boss provides at least one passage for gas between an interior of a respective one of the first and second compartments and a system external to the tank.

An embodiment of the tank further comprises at least one device for maintaining pressure in at least one of the first and second compartments at a certain level by discharging gas from at least one of the first and second compartments.

It is possible to implement this embodiment using a pressure relief valve. As one compartment, e.g. the first compartment is filled with hydrogen or other compressed gas at relatively high pressure (e.g. more than 35 MPa, generally less than about 80 or 90 MPa), the pressure relief valve discharges gas from the other, such that the load on the vessel wall remains essentially constant. In other embodiments, the device may comprise a controller, at least one pressure sensor arranged to provide a signal to the controller and at least one combination of a valve and a valve actuator controlled by the controller. This embodiment is suitable in particular for transportable tanks to be filled and emptied by external systems. The external system need only supply the hydrogen to the first compartment or a compressed gas to the second compartment. The device for maintaining pressure causes the gas in the other compartment to be discharged simultaneously.

According to another aspect, the system according to the invention for supplying gas to a tank, e.g. a tank according to the invention, is for use with a tank comprising:
a vessel having an interior closed by a vessel wall for containing gas inside the vessel; and
a barrier separating gas in a first compartment formed in the interior of the vessel from gas in a second compartment formed in the interior of the vessel, at least part of the barrier being movable in response to a pressure difference between the gas in the first compartment and the gas in the second compartment to decrease the pressure difference, wherein the system comprises:
   a source of compressed gas;
   a system for forming a gas flow connection between the source and one of the first and second compartments to supply the compressed gas to that compartment;
   a device for causing a controlled discharge of gas from the other of the first and second compartments during the supply of the compressed gas; and
   a system for controlling at least one of the supply of the compressed gas and the controlled discharge of gas to maintain pressure in at least one of the first and second compartments within at least a certain range of a certain value.

Where the system is used to fill the tank, in particular the first compartment, with hydrogen, the compressed gas is the hydrogen. Where the system is used to empty the tank of hydrogen, the compressed gas is a displacement gas, e.g. nitrogen or a gas mixture mainly comprising hydrogen. The barrier and the system for forming a gas flow connection between the source and only one of the first and second compartments to supply the compressed gas to that compartment ensure that the hydrogen and displacement gas do not mix. In embodiments in which the second compartment surrounds the first compartment, there is also substantially no contact between the hydrogen and the vessel wall. The system for controlling at least one of the supply of the compressed gas and the controlled discharge of gas to maintain pressure in at least one of the first and second compartments within at least a certain range of a certain value minimises fatigue of the vessel wall.

The certain value may be the end point of the certain range and the certain range may be substantially zero. This depends essentially on whether a small degree of hysteresis is provided and whether the pressure is that of one of the compartments completely bounded by the vessel wall. If, for example, the second compartment completely surrounds the first compartment and the controlling pressure is that of the second compartment, then that pressure can be maintained essentially exactly at a certain value. If the sensed pressure is that of the first compartment and the barrier is elastic, the pressure in the first compartment is kept within a certain range of a certain value, the range being determined by the range of the elastic force due to deformation of the barrier.

The barrier may be a completely movable barrier, like a piston. The barrier may alternatively be flexible and fixed to the vessel at one or more locations, in which case only part of the barrier can move in response to the pressure difference.

In the present context, a system for forming a gas flow connection between the source and one of the first and second compartments to supply the compressed gas to that compartment may be a system providing a permanent gas flow connection or a system comprising co-operating connectors to establish a temporary connection. The system comprises a device for causing a controlled discharge of gas from the other of the first and second compartments during the supply of the compressed gas. That device may cause a valve not part of the system but communicating with the other of the first and second compartments to open. Alternatively, the device may comprise the valve. In the present context, discharge does not necessarily imply that gas is vented to the environment. Gas is merely removed from the compartment concerned.

In an embodiment of the system, the source of compressed gas comprises an apparatus for producing hydrogen.

Examples include an electrolyser, a system for direct decomposition of methane into carbon and hydrogen and a steam methane reforming apparatus.

In this embodiment, the system is configured for filling the first compartment of the tank with locally produced hydrogen.

An embodiment of the system further includes at least one electricity generator of a different type than one driven by a combustion engine operating on a fossil fuel, wherein the electricity generator is arranged to supply electrical power to at least the source of compressed gas.

Compressed gas functions as a store of energy, regardless of the calorific value of the gas. Thus, the system of this embodiment is suitable for temporarily storing surplus renewable energy generated locally. The electricity generator may be comprised in a wind turbine, a photovoltaic panel, a nuclear power plant a hydropower plant or a power plant operating on biomass or bio-gas, for example.

An embodiment of the system further comprises:
an expansion turbine;
a generator driven by the expansion turbine; and
a system for conducting the discharged gas to the expansion turbine.

Thus, the energy stored in compressed gas caused to be discharged is recovered by the system as the system is used to fill the tank with the other gas. If, for example, the system is used to fill the first compartment with hydrogen, compressed gas from the second compartment is used to perform work to generate electricity. Likewise, if the system is used to empty the first compartment whilst supplying compressed gas (e.g. nitrogen or a mixture mainly comprising nitrogen) to the second compartment to maintain the pressure in the tank at a certain value, the hydrogen is first used to perform work and generate electricity.

An embodiment of the system further comprises at least one heat exchanger for exchanging heat between the discharged gas and a further fluid.

Heat exchange may occur prior to, during or following expansion of the discharged gas. In cases in which the discharged gas is hydrogen, for example, expansion will bring about a temperature rise of the hydrogen. The hydrogen can be cooled in the heat exchanger. In cases in which the discharged gas is another gas (with the exception of helium), expansion will give rise to a temperature drop, at least at ambient temperature. Heat can be extracted from the further fluid, which may be used as a coolant, for example. In cases in which the further fluid is at an elevated temperature, the discharged gas can be heated in a heat exchanger positioned upstream of an expansion turbine arranged to drive a generator. This increases the efficiency. In such embodiments, the further fluid can carry heat produced in the system or produced externally and transported to the system.

An example of any embodiment in which the system further comprises at least one heat exchanger for exchanging heat between the discharged gas and a further fluid further comprises:
at least one of a fuel cell and an electrolyser, arranged to exchange heat with the further fluid; and
a system for circulating the further fluid through at least one of the at least one heat exchangers.

This embodiment makes efficient use of residual heat or cooling capacity and allows the fuel cell or electrolyser to operate in a favourable regime. Providing heat to an electrolyser increases the efficiency with which electricity is used to produce hydrogen. Cooling fuel cells prevents temperature rises that might degrade them or decrease their efficiency. The heat from the fuel cell can be transferred to the compressed gas discharged from the tank, for example, to increase the temperature thereof prior to expansion in a turbine expander arranged to drive a generator.

An example of any embodiment in which the system further comprises at least one heat exchanger for exchanging heat between the discharged gas and a further fluid is arranged to use the compressed gas as the further fluid in at least one of the at least one heat exchangers.

The discharged gas, e.g. nitrogen or a mixture comprising mainly nitrogen, is thus heated by the compressed gas.

An example of any embodiment in which the system further comprises at least one heat exchanger for exchanging heat between the discharged gas and a further fluid further comprises a system for circulating the further fluid through at least one of the at least one heat exchangers; and
at least one of:
a connection between the system for circulating the further fluid and a heat network from which the further fluid is obtained; and
at least one heat exchanger for exchanging heat between the further fluid and fluid distributed in a heat network.

In this embodiment, heat can be supplied to or from an external system. The heat network may be a district heating network or a local heat network. As an example, the heat network may distribute heat from an industrial plant, e.g. a power plant such as a nuclear power plant or a waste incineration plant.

In an embodiment of the system, at least one of the system for forming a gas flow connection between the source and one of the first and second compartments to supply the compressed gas to that compartment and the device for causing a controlled discharge of gas from the other of the first and second compartments during the supply of the compressed gas comprises a connector for establishing a temporary gas flow connection between the system and a transportable tank, e.g. a transportable tank installed in or loaded onto a vehicle.

Such an embodiment is useful for implementing a hydrogen refuelling station, if the tank is installed in the vehicle. A variant may also be used to transport hydrogen or another compressed gas at high pressure in a transportable tank loaded onto a vehicle, e.g. a hydrogen trailer or a ship. There would then be a system according to the invention for supplying hydrogen or the other compressed gas to the tank at one location and a system according to the invention for supplying another gas as a displacement gas, e.g. nitrogen or a mixture comprising mainly nitrogen, to the tank at another location.

In an embodiment of the system, the source of compressed gas includes a conversion device for reacting a fuel with a gas mixture comprising predominantly nitrogen and further comprising at least one oxidant,
wherein the conversion device is arranged to supply at least a portion of fluid obtained upon reaction to the system for forming a gas flow connection between the source and one of the first and second compartments of the tank.

This embodiment is suitable for providing nitrogen or a mixture of gases comprising mainly nitrogen as the compressed gas for filling the second compartment whilst the first compartment is emptied of hydrogen. The portion of fluid includes at least some of the nitrogen. The conversion device may be arranged to use the hydrogen as a fuel. The conversion device may be a combustion engine or a fuel cell, for example.

According to another aspect, the system for storing a first compressed gas, e.g. compressed hydrogen, according to the invention comprises:
at least one tank, e.g. according to the invention, each tank comprising:
a vessel having an interior closed by a vessel wall for containing gas inside the vessel; and
a barrier separating gas in a first compartment formed in the interior of the vessel from gas in a second compartment formed in the interior of the vessel, at least part of the barrier being movable in response to a pressure difference between the gas in the first compartment and the gas in the second compartment to decrease the pressure difference; and
at least one system according to the invention for supplying the first or a second compressed gas to at least one of the tanks to fill the tank with, respectively empty the tank of, the first compressed gas.

This system allows the tank to be used over a relatively long time to store the first compressed gas at relatively high pressure (e.g. more than 35 MPa), in particular compressed hydrogen, whilst still being emptied and filled relatively completely.

In an embodiment of the system, the tank is a transportable tank, and the at least one system for supplying gas to at least one of the tanks comprises a first system arranged to supply hydrogen to at least one of the tanks and a second system, in which the source of compressed gas is a source of at least one gas other than hydrogen, the second system being arranged to recover hydrogen as the gas caused to be discharged from the tank.

This system comprises a system for producing hydrogen as the first compressed gas at one site and a system consuming hydrogen at another site. The at least one tank is used to transport the hydrogen between the sites. A gas distribution network adapted to transport hydrogen through pipelines over relatively long distances (e.g. longer than 50 km) is not required.

According to another aspect, the vehicle according to the invention comprises at least one of a tank according to the invention and a system for storing a first compressed gas, e.g. compressed hydrogen, according to the invention.

The vehicle can be an airborne, waterborne or landborne vehicle, e.g. a car, lorry, locomotive or the like. The tank and system allow the tank to last for a large part of the lifetime of the vehicle.

In an embodiment, the vehicle further comprises a hydrogen-powered drive train.

In this embodiment, the hydrogen, as the first compressed gas, is also used to power the vehicle. The vehicle may, for example, be a fuel-cell electric vehicle or a vehicle equipped with an internal combustion engine configured to run on hydrogen.

According to another aspect, the invention provides a method of supplying gas to a tank, e.g. a tank according to the invention, the tank comprising:
a vessel having an interior closed by a vessel wall for containing gas inside the vessel; and
a barrier separating gas in a first compartment formed in the interior of the vessel from gas in a second compartment formed in the interior of the vessel, at least part of the barrier being movable in response to a pressure difference between the gas in the first compartment and the gas in the second compartment to decrease the pressure difference, wherein the method comprises:
   supplying compressed gas to one of the first and second compartments; and
   discharging gas from the other of the first and second compartments during the supply of the compressed gas, wherein pressure in at least one of the first and second compartments is maintained within at least a certain range of a certain pressure.

The method provides effects corresponding to those of the system for supplying gas to a tank. The method is suitable for use with a tank according to the invention, just as the tank is suitable, and may be configured, for use in any embodiment of the method according to the invention.

In an embodiment of the method, supplying compressed gas to one of the first and second compartments comprises generating and compressing hydrogen gas.

The steps of generating and compressing hydrogen gas may be combined, e.g. in an electrolyser arranged to supply compressed gas. The method allows to generate hydrogen and fill a tank on-site, with minimal transport through pipelines and fittings that might need to be adapted specifically to be compatible with hydrogen transport.

An embodiment of the method comprises:
obtaining the discharged gas,
expanding the obtained gas in an expansion turbine; and
using the expansion turbine to drive a generator.

This embodiment makes efficient use of the energy stored in the compressed gas discharged from the tank.

An embodiment of the method comprises obtaining the discharged gas and exchanging heat between the obtained gas and at least one further fluid.

This embodiment allows for the gas to be heated prior to expansion or to recover heat subsequent to expansion (in the case of hydrogen) or extract heat from further fluid used as a coolant subsequent to expansion (in the case of gases other than hydrogen or helium).

In an example of any embodiment of the method comprising obtaining the discharged gas and exchanging heat between the obtained gas and at least one further fluid, the further fluid is used for temperature regulation of at least one of a fuel cell and an electrolyser.

This allows the fuel cell or electrolyser to operate more efficiently.

In an example of any embodiment of the method comprising obtaining the discharged gas and exchanging heat between the obtained gas and at least one further fluid, the at least one further fluid comprises the gas supplied to one of the first and second compartments.

An example of any embodiment of the method comprising obtaining the discharged gas and exchanging heat between the obtained gas and at least one further fluid further comprises heating the further fluid using heat obtained from a heat network, e.g. a heat network arranged to distribute heat from an industrial plant, e.g. a power plant.

This embodiment provides a way of making use of residual heat from such a plant, e.g. a power station such as a nuclear power station or a waste incineration plant.

In an embodiment of the method, the tank is a transportable tank.

This embodiment is for use in transporting hydrogen without the need for extensive hydrogen-compatible pipeline networks. The embodiment may, for example be used to distribute hydrogen from a production site to refuelling stations.

The invention will be explained in further detail with reference to the accompanying drawings, in which:
- Fig. 1: is a schematic representation of a first tank for storing hydrogen;
- Fig. 2: is a schematic representation of a second tank for storing hydrogen;
- Fig. 3: is a cross-sectional view illustrating the build-up of an outer wall of any of the tanks of Fig. 1 and 2;
- Fig. 4: is a diagram of a system for filling a tank like those of Figs. 1-3 with hydrogen;
- Fig. 5: is a diagram of a system for emptying a tank like those of Figs. 1-3 of hydrogen whilst filling the tank with at least nitrogen; and
- Fig. 6: is a diagram illustrating parts of a fuel-cell electric vehicle comprising a tank like those of Figs. 1-3.

A first tank 1 for storing hydrogen comprises a vessel 2 having an interior closed by a vessel wall 3 for containing gas inside the vessel 2.

The vessel 2 is an elongated vessel 2. In the illustrated embodiment, the vessel wall 3 is cylindrical over a majority of the length of the vessel 2, the cylinder being closed by dome-shaped, at least approximately hemispherical, sections of the vessel wall 3 at either longitudinal end. The dome-shaped section at one end is interrupted by a boss 4 in which two fittings 5,6 are arranged.

A barrier 7 divides the interior of the vessel 2 into a first compartment 8 and a second compartment 9. Gas in the first compartment 8 is separated from gas in the second compartment 9 by the barrier 7, which is substantially impermeable to hydrogen. The barrier 7 extends the length of the interior of the vessel 2 from one axial end to the other axial end and is fixed to the vessel wall 3 along the circumference of the barrier 7, except where the barrier 7 is fixed in a gas-tight manner to the boss 4. A first fitting 5 provides a gas-tight connection between the first compartment 8 and any system external to the first tank 1 that is connected in a gas-tight manner to the first fitting 5. Thus, the first fitting 5 is connectable to a system external to the first tank 1 for exchanging gas between that system and the first compartment 8. A second fitting 6 provides a gas-tight connection between the second compartment 9 and any other system external to the first tank 1 that is connected in a gas-tight manner to the second fitting 6. Thus, the second fitting 6 is connectable to a system external to the first tank 1 for exchanging gas between that system and the second compartment 9. In other embodiments, there may be one fitting providing two separate connections for exchanging gas between at least one external system and the first and second compartments 8,9, respectively.

In yet a further embodiment, there may be two bosses, one at each axial end. The first fitting 5 is provided in one boss and the second fitting 6 is provided in the other.

The barrier 7 is flexible to allow a central part of the barrier 7 to move in response to pressure differences between the gas in the first compartment 8 and the gas in the second compartment 9. The movement is such as to decrease the volume of the compartment with the lower pressure and increase the volume of that with the higher pressure. The pressure difference is thereby decreased. The barrier 7 is movable into contact with the interior surface of the vessel wall 3 over at least 50 % of the interior surface of the vessel wall 3.

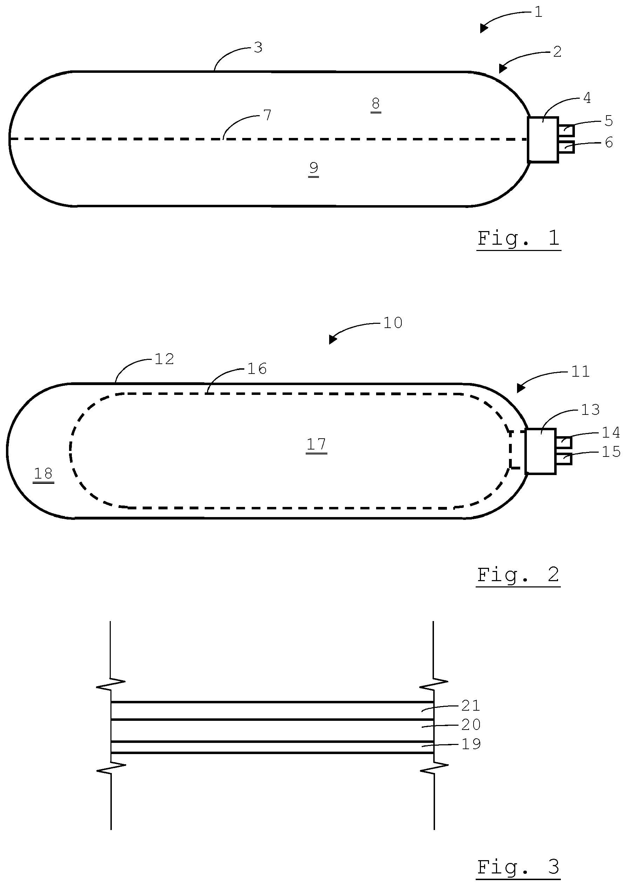

In an embodiment, the barrier 7 can stretch, i.e. the barrier 7 is distensible. The pressure difference between the gas in the first and second compartments 8,9 will cause the barrier 7 to distend in the direction of the compartment with the lower pressure, decreasing the pressure difference until this pressure difference is balanced by the elastic forces tending to return the barrier 7 to the central position shown in Fig. 1.

The barrier 7 may comprise at least one layer comprising polymer material, e.g. a layer of polyester film. An example is a layer of biaxially-oriented polyethylene terephthalate. Such materials have relatively high tensile strength and forms a good gas barrier. Another example is high-density polyethylene. In an embodiment, the barrier 7 may additionally comprise at least a layer of metal foil, e.g. obtainable by coating the polyester film with metal. Suitable metals include aluminium and steel.

In an embodiment, at least one of the first and second fittings 5,6 comprises a pressure regulator arranged to vent one of the first and second compartments 8,9 in response to pressure in that or the other of the first and second compartments 8,9 exceeding a pre-set pressure. Thus, as one of the first and second compartments 8,9 is supplied with compressed gas, a controlled discharge of gas from the other of the first and second compartments 8,9 is effected. A pre-determined pressure is maintained in at least the compartment 8,9 of which the pressure is sensed. Because the barrier 7 is flexible, the pressure in the other is at least kept below a value corresponding to that pre-determined pressure and a differential due to the elastic force caused by the distension of the barrier 7. The pressure regulator may be pneumatic or comprise a system comprising a pressure transducer, a controller and an actuator for driving a venting valve (not shown). By maintaining the pressure at a generally constant value during the supply of gas, variations in load on the vessel wall 3 are kept relatively low and the pressure differential across the barrier 7 is also reduced further. This prevents permeation of, in particular, hydrogen, through the barrier 7.

A second tank 10 (Fig. 2) for storing hydrogen comprises a vessel 11 having an interior closed by a vessel wall 12 for containing gas inside the vessel 11.

The vessel 11 is an elongated vessel 11. In the illustrated embodiment, the vessel wall 12 is cylindrical over a majority of the length of the vessel 11, the cylinder being closed by dome-shaped, at least approximately hemispherical, sections of the vessel wall 12 at either longitudinal end. The dome-shaped section at one end is interrupted by a boss 13 in which two fittings 14,15 or concentric fittings are arranged.

A barrier 16 divides the interior of the vessel 11 into a first compartment 17 and a second compartment 18. Gas in the first compartment 17 is separated from gas in the second compartment 18 by the barrier 16, which is substantially impermeable to hydrogen. In contrast to the barrier 7 of the first tank 1, the barrier 16 of the second tank 10 encloses the first compartment 17, but for a connection to the boss 13 at a throat of the barrier 16. In other words, the barrier 16 is bag-shaped. The second compartment 18 is formed between the barrier 16 and an interior surface of the vessel wall 12. In use, hydrogen is stored in the first compartment 17. A different gas or mixture of cases, e.g. comprising at least, e.g. predominantly, nitrogen, is stored in the second compartment 18. Thus, the hydrogen is separated from the vessel wall 12 by at least the barrier 16 and under most circumstances also by a layer of other gas or gases.

A first fitting 14 provides a gas-tight connection between the first compartment 17 and any system external to the second tank 10 that is connected in a gas-tight manner to the first fitting 14. Thus, the first fitting 14 is connectable to a system external to the second tank 10 for exchanging gas between that system and the first compartment 17. A second fitting 15 provides a gas-tight connection between the second compartment 18 and any other system external to the second tank 10 that is connected in a gas-tight manner to the second fitting 15. Thus, the second fitting 15 is connectable to a system external to the second tank 10 for exchanging gas between that system and the second compartment 18.

In an alternative embodiment to the one shown, the vessel 11 is provided with two bosses, for example at opposite axial ends, the fitting 14 being provided in one boss and the second fitting 15 in the other.

The barrier 16 is flexible to allow almost all of the barrier 16 (with the exception of the section forming the throat, which is attached to the boss 13) to move in response to pressure differences between the gas in the first compartment 17 and the gas in the second compartment 18. The movement is such as to decrease the volume of the compartment with the lower pressure and increase the volume of that with the higher pressure. The pressure difference is thereby decreased. The barrier 16 is movable into contact with the interior surface of the vessel wall 12 over at least 50 % of the interior surface of the vessel wall 12.

In an embodiment, the barrier 16 can stretch, i.e. the barrier 16 is distensible. The first compartment 17 can be inflated like a balloon. The pressure difference between the gas in the first and second compartments 17,18 will cause the barrier 16 to distend in the direction of the compartment with the lower pressure, decreasing the pressure difference until this pressure difference is balanced by the elastic forces tending to return the barrier 16 to a relaxed state.

The barrier 16 may comprise at least one layer comprising polymer material, e.g. a layer of polyester film. An example is a layer of biaxially-oriented polyethylene terephthalate. Such materials have relatively high tensile strength and forms a good gas barrier. Another example is high-density polyethylene. In an embodiment, the barrier 16 may additionally comprise at least a layer of metal foil, e.g. obtainable by coating the polyester film with metal. Suitable metals include aluminium and steel.

In an embodiment, the second tank 10 comprises a pressure regulator (not shown in detail) arranged to vent one of the first and second compartments 17,18 in response to pressure in that or the other of the first and second compartments 17,18 exceeding a pre-set pressure. Thus, as one of the first and second compartments 17,18 is supplied with compressed gas, a controlled discharge of gas from the other of the first and second compartments 17,18 is effected. A pre-determined pressure is maintained in at least the compartment 17,18 of which the pressure is sensed. Because the barrier 16 is, the pressure in the other is at least kept below a value corresponding to that pre-determined pressure and a differential due to the elastic force caused by the distension of the barrier 16. The pressure regulator may be pneumatic or comprise a system comprising a pressure transducer, a controller and an actuator for driving a venting valve (not shown). By maintaining the pressure at a generally constant value during the supply of gas, variations in load on the vessel wall 12 are kept relatively low and the pressure differential across the barrier 16 is also reduced further. This prevents permeation of, in particular, hydrogen, through the barrier 16.

But for the bosses 4;13 with the two fittings 5,6;14,15 the vessels 2;11 of the first and second tanks 1;10 are similar to a Type III or type IV (ISO 19881:2018) compressed hydrogen storage tank. Each of the vessel walls 3;12 is multi-layered (Fig. 3), comprising a liner 19, a layer 20 of composite helical windings and a layer 21 of composite hoop windings. The liner 19 may be a metal liner 19, e.g. made of aluminium (e.g. aluminium 6061 or 7060) or steel (e.g. inox or chrome molybdene), or a polymer liner 19. A polymer liner 19 with a metal coating or a liner 19 comprising a laminate of a polymer layer and a metal foil are also possible. The polymer may comprise at least one of nylon, polycaprolactam (nylon 6) and nylon 6,6. The liner 19 may be blow-moulded. Injection-moulding or extrusion-moulding are also possible. The liner 19 is responsible for gas-tightness. The other layers 20,21 enable the vessels 2;11 to withstand pressures of at least twice the working pressure of approximately 70 MPa.

The windings in the other layers 20,21 are formed by winding tape around the liner 19, which functions as a mandrel in the manufacturing process. The tape comprises fibre-reinforced composite. The fibres comprise continuous fibre, having an aspect ratio of at least 500. In an embodiment, the fibre comprises carbon fibre. Alternatively or additionally, the fibre may comprise glass fibre and/or aromatic polyamide fibre. The fibre is embedded in a polymer matrix. The polymer may comprise a thermoplastic polymer. The polymer may comprise at least one of epoxy resin and a polyamide, e.g. at least one of nylon, polycaprolactam (PA-6), PA-66, PA-410, PA-510 or PA-612. Between 0.001 wt.-% and 10 wt.-% of the thermoplastic matrix may be formed by further ingredients. The further ingredient may include at least one of a flame retardant, a UV-stabiliser, a heat stabiliser, a mould release agent and the like.

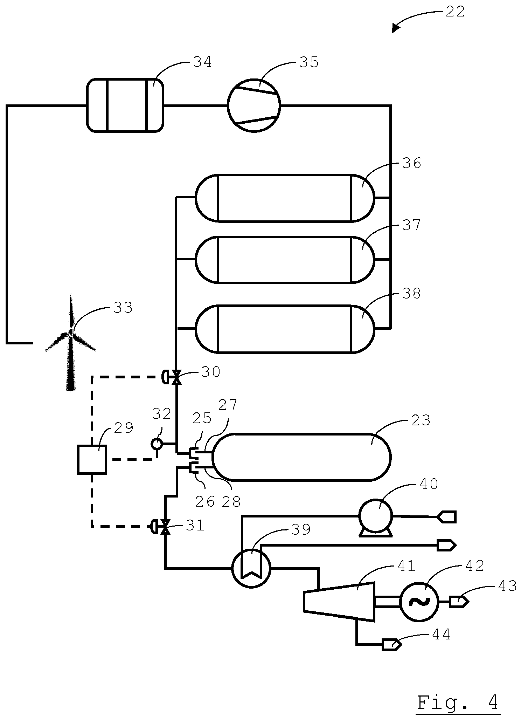

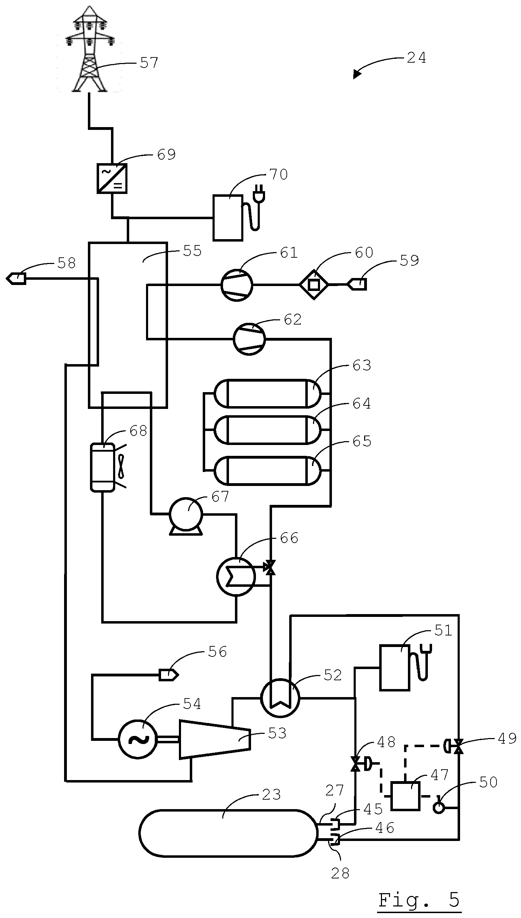

A system 22 (Fig. 4) for supplying hydrogen to a transportable tank 23 is conceived for use together with a system 24 (Fig. 5) for discharging hydrogen from the transportable tank 23. The transportable tank 23 may be an embodiment of the first tank 1 or of the second tank 10.

The transportable tank 23 may be permanently installed in a vehicle, e.g. a waterborne, airborne or landborne vehicle. Examples of the latter include locomotives, cars, lorries, tractors, diggers, cranes and the like. In that case, the hydrogen may be used to power the vehicle.

In systems comprising at least one system 22 (Fig. 4) for supplying hydrogen to the transportable tank 23 and at least one system 24 (Fig. 5) for discharging hydrogen from the transportable tank 23, the transportable tank 23 is used essentially for hydrogen transport. In that case, the transportable tank 23 may be comprised in a cluster on a hydrogen tube trailer. The cluster may comprise at least four, e.g. up to 40 such transportable tanks 23. Such tanks have an elongated shape. A typical length may be in the range of six to 20 metres.

The transportable tank 23 comprises at least a vessel having an interior closed by a vessel wall for containing gas inside the vessel and a movable barrier separating gas in a first compartment formed in the vessel interior from gas in a second compartment formed in the vessel interior, the barrier being movable in response to a pressure difference between the gas in the first compartment and the gas in the second compartment to decrease the pressure difference. The barrier may correspond to one of the barriers 7,16 described above. Alternatively, the barrier may be some sort of piston or the like.

The system 22 for supplying hydrogen comprises first and second connectors 25,26 for releasably engaging first and second connectors 27,28 on the transportable tank 23. The first and second connectors 27,28 provide separate gas-tight connections to the first and second compartments in the transportable tank 23, respectively.

A controller 29 controls the operation of a hydrogen supply valve 30 and a gas discharge valve 31 through respective actuators (not shown) on the basis of a signal from a pressure sensor 32 for generating a signal representative of the pressure in at least one of the first and second compartments in the transportable tank 23. The controller 29 is arranged to maintain that pressure at a certain value by causing gas to be discharged from the second compartment as hydrogen is supplied to the first compartment.

In the illustrated embodiment, surplus electrical energy from a renewable power source 33, for present purposes a source comprising an electrical generator of a different type than one driven by a combustion engine operating on a fossil fuel, is supplied to an electrolyser 34. The electrolyser 34 is also supplied with water in order to generate hydrogen. The electrolyser 34 may be followed by one or more devices for purifying the hydrogen (not shown), e.g. by separating out any remaining water.

In the illustrated embodiment, the hydrogen generated is compressed by a hydrogen compressor 35 and supplied to at least one of a high-pressure intermediate storage tank 38, a medium-pressure intermediate storage tank 37 and a low-pressure intermediate storage tank 36. In particular, the hydrogen may be supplied first to the low-pressure intermediate storage tank 36, then the medium-pressure intermediate storage tank 37 and then the high-pressure intermediate storage tank 38, with further compressors (not shown) increasing the pressure between successive intermediate storage tanks 36-38.

In an embodiment, a dehydrator (not shown) is situated between the electrolyser 34 and the compressor 35. Other apparatus for purifying the product stream from the electrolyser 34 may be employed in addition or alternatively.

The electrolyser 34 may comprise a high-pressure electrolyser providing a compressed hydrogen output of hydrogen with a pressure in the range of 12 - 20 MPa. In that case, the hydrogen compressor 35 may be dispensed with. Suitable electrolysers are disclosed in WO 2022/128854 A1 and WO 2022/128855 A1.

Otherwise, the electrolyser 34 may comprise a Polymer-Electrolyte Membrane (PEM) electrolyser, an alkaline electrolyser or a solid oxide electrolyser, for example.

The electrolyser 34 may be arranged to operate at elevated temperatures by supplying heat from a heat exchange medium, as will be explained. This increases the efficiency of the electrolysis reaction.

In another embodiment, the electrolyser 34 is replaced by an apparatus for direct decomposition of methane into carbon and hydrogen. An example of a suitable apparatus is disclosed in WO 2020/141153 A1.

The hydrogen compressor 35 may be a reciprocating piston compressor, an ionic liquid compressor, an electrochemical hydrogen compressor (e.g. as disclosed in WO 2020/106153 A1, WO 2020/106154 A1 and WO 2020/106155 A1), a hydride compressor, a piston-metal diaphragm compressor, a guided rotor compressor or a linear compressor, for example.

As mentioned, the method of supplying compressed hydrogen to the transportable tank 23 comprises regulating discharge of gas from the second compartment during the supply of the compressed hydrogen to the first compartment, such as to maintain a certain pressure in at least one of the first and second compartments.

In the illustrated embodiment, the discharged gas is passed through a heat exchanger 39 to transfer heat from a further fluid to the discharged gas. A pump 40 is arranged to circulate the further fluid through the heat exchanger. In one embodiment, the further fluid is either a fluid obtained directly from a heat network arranged to distribute heat from an industrial power plant or a fluid circulated through a further heat exchanger (not shown) to transfer heat from the heat network to the further fluid. The further fluid may be water. The industrial plant may in particular be a power plant. A suitable power plant might be a nuclear power plant, e.g. one comprising a Small Modular Reactor, or a gas-fired or biomass-fired power plant. This power plant may also be arranged to supply electrical power to the electrolyser 34 during periods of low demand.

The further fluid may additionally or alternatively be used to regulate, e.g. raise or lower, the temperature of the electrolyser 34 and/or of water supplied to the electrolyser 34. Raising the temperature of the water may be of use if the electrolyser 34 is arranged to react water supplied at an elevated temperature, e.g. 70° C or above. Cooling the electrolyser 34 may keep the electrolyser 34 operating in an optimal temperature range.

Regardless of whether the heat exchanger 39 is present, the discharged gas is expanded in a turboexpander 41 arranged to drive a generator 42. The power is provided at an electrical power output 43. The electrical power output 43 may be connected to the electrical grid and/or to other components of the system 22.

The turboexpander may be a piston turboexpander, a rotary piston turboexpander, a drag turboexpander, a radial turboexpander or an axial turboexpander, for example. The discharged gas may then be further expanded or immediately vented to atmosphere via a gas outlet 44.

The system 24 (Fig. 5) for discharging hydrogen from the transportable tank 23 comprises a first and a second connector 45,46 for releasably engaging the first and second connectors 27,28 on the transportable tank 23. The first and second connectors 27,28,45,46 of the tank 23 and the system 24 provide separate gas-tight connections to the first and second compartments in the transportable tank 23, respectively.

The system 24 is arranged to effect a controlled discharge of gas from the first compartment during supply of compressed nitrogen to the second compartment, wherein at least one of the supply of the compressed nitrogen and the controlled discharge of hydrogen are controlled to maintain a certain pressure in at least one of the first and second compartments of the transportable tank 23.

In the illustrated embodiment, the system 24 comprises a controller 47 arranged to control the operation of a hydrogen discharge valve 48 and a compressed gas supply valve 49 through respective actuators (not shown) on the basis of a signal from a pressure sensor 50.

In the illustrated embodiment, some of the hydrogen is supplied to a hydrogen refuelling station 51 for refuelling vehicles. In an embodiment, this may involve passing the compressed hydrogen through an expander and then, optionally, through a heat exchanger to extract heat from the hydrogen heated through expansion (the Joule-Thomson coefficient is negative for hydrogen at ambient temperature).

At least some of the hydrogen is passed through a first heat exchanger 52 to raise the temperature of the hydrogen before the hydrogen is supplied to a turboexpander 53 arranged to drive a generator 54. The expanded hydrogen is then supplied to a fuel cell stack 55.

The generator 54 is arranged to supply electrical power at an electrical output 56, which may be connected to the grid 57, to a local grid, to a battery pack or to a further component of the system 24.

The hydrogen not reacted is directed to a hydrogen outlet 58. The hydrogen outlet 58 may be connected to the hydrogen refuelling station 51, for example, to a system for blending the hydrogen with natural gas for supply to the gas grid, to a temperature-swing adsorption apparatus (TSA), a pressure-swing adsorption apparatus (PSA), etc.

In the illustrated embodiment, the source of compressed gas for maintaining pressure in the transportable tank 23 comprises the fuel cell stack 55. The system comprises an air inlet 59 followed by an air cleaner 60 and a first compressor 61. The first compressor 61 supplies the clean air to the fuel cell stack 55 where the oxygen in the air is reacted with the hydrogen to supply a gas mixture comprising predominantly nitrogen. This gas mixture is compressed by a second compressor 62.

The first and second compressors 61,62 may be a reciprocating piston compressor, an ionic liquid compressor, an electrochemical hydrogen compressor (e.g. as disclosed in WO 2020/106153 A1, WO 2020/106154 A1 and

WO 2020/106155 A1), a hydride compressor, a piston-metal diaphragm compressor, a guided rotor compressor or a linear compressor, for example. The first and second compressors 61,62 may be connected to the electrical output 56 to provide them with electrical power.

In the illustrated embodiment, the compressed gas can be supplied to at least one of a low-pressure intermediate storage tank 63, a medium-pressure intermediate storage tank 64 and a high-pressure intermediate storage tank 65. The compressed gas can also bypass these intermediate tanks 63-65. Suitable valves (not shown) are provided for this purpose. In other embodiments, these intermediate storage tanks 63-65 may be omitted. Where they are present, further compressors, e.g. of the types mentioned above in connection with the first and second compressors 61,62, may be arranged to increase the pressure between successive ones of the intermediate storage tanks 63-65.

In the illustrated embodiment, there is a possibility for the compressed gas to pass through a second heat exchanger 66 to transfer heat to a heat exchange fluid used to regulate the temperature of the fuel cell stack 55. The heat exchange fluid may be water.

In the illustrated embodiment, the heat exchange fluid is circulated by a pump 67. The heat exchange fluid can additionally pass through a radiator 68 for cooling purposes. The radiator 68 may be omitted or replaced by a different type of heat exchanger in alternative embodiments.

After passing through the second heat exchanger 66, the compressed gas passes through the first heat exchanger 52, and from there to the transportable tank 23 via the compressed gas supply valve 49. The pressure of the gas will typically be in the range of 10 - 80 MPa, e.g. between 40 and 50 MPa or between 70 and 90 MPa.

In the illustrated embodiment, the system 24 is arranged to supply electrical power to the grid 57 via an inverter 69. Electrical power generated by the fuel cell stack 55 is also supplied directly to at least one electric vehicle charging station 70.

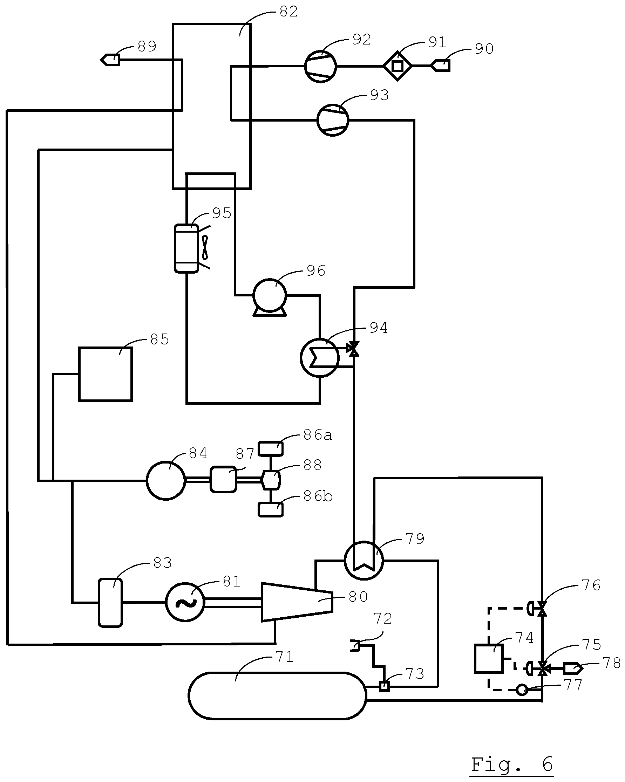

A variant of the system 24 for discharging hydrogen from the transportable tank 23 can be implemented in a vehicle (Fig. 6) to discharge hydrogen from a tank 71 fitted to the vehicle. This reduces or eliminates the need to replace the tank 71 during the lifetime of the vehicle.

In the illustrated embodiment, the vehicle is a Fuel Cell Electric Vehicle (FCEV).

The tank 71 comprises at least a vessel having an interior closed by a vessel wall for containing gas inside the vessel and a movable barrier separating gas in a first compartment formed in the vessel interior from gas in a second compartment formed in the vessel interior, the barrier being movable in response to a pressure difference between the gas in the first compartment and the gas in the second compartment to decrease the pressure difference. The barrier may correspond to one of the barriers 7,16 described above. Alternatively, the barrier may be some sort of piston or the like. Thus, the vehicle tank 71 may be an embodiment of the first tank 1 or the second tank 10, for example. The second tank 10 provides the effect that the risk of hydrogen permeation through the vessel wall 12 is minimised.

In the illustrated embodiment, the FCEV comprises a connector 72 for refuelling. A valve system 73 is arranged to provide a gas-tight connection to the first compartment of the tank 71. The valve system 73 can be switched upon refuelling in order to supply hydrogen from the first compartment during operation of the FCEV.

In the illustrated embodiment, the FCEV comprises a controller 74 arranged to control the operation of a compressed gas discharge valve 75 and a compressed gas supply valve 76 through respective actuators (not shown) on the basis of a signal from a pressure sensor 77. When the FCEV is being refuelled, hydrogen is supplied to the first compartment of the tank 71. The controller 74 controls the compressed gas discharge valve 75 to vent compressed gas through a compressed gas outlet 78 such as to maintain the pressure in the tank 71 at a certain value. Thus, a rapid supply of hydrogen during refuelling does not give rise to a rapid rise in pressure in the tank 71. The load on the vessel wall of the tank 71 does not change appreciably.

When the hydrogen is being consumed during operation of the FCEV, the controller 74 is arranged to control the operation of the compressed gas supply valve 76 to supply compressed gas, predominantly nitrogen, to the second compartment of the tank 71 in order to maintain the pressure in at least one of the first and second compartments at a certain value.

At least some of the hydrogen from the first compartment of the tank 71 is passed through a first heat exchanger 79 to raise the temperature of the hydrogen before the hydrogen is supplied to a turboexpander 80 arranged to drive a generator 81. The expanded hydrogen is then supplied to a fuel cell stack 82.

The generator 81 is arranged to supply electrical power via a power conditioner 83 to at least one electrical motor 84 and/or to a battery 85. The fuel cell stack 82 likewise provides electrical power to the electrical motor 84 and/or the battery 85. The electrical motor 84 is arranged to drive wheels 86a,b of the FCEV via a torque converter 87 and a differential 88, together forming a drive train.

The hydrogen not reacted in the fuel cell stack 82 is directed to a hydrogen outlet 89.

The FCEV takes in air through an air inlet 90 followed by an air cleaner 91 and a first compressor 92. The first compressor 92 supplies the clean air to the fuel cell stack 82 where the oxygen in the air is reacted with the hydrogen to supply a gas mixture comprising predominantly nitrogen. This gas mixture is compressed by a second compressor 93.

The first and second compressors 92,93 may be a reciprocating piston compressor, an ionic liquid compressor, an electrochemical hydrogen compressor (e.g. as disclosed in WO 2020/106153 A1, WO 2020/106154 A1 and WO 2020/106155 A1), a hydride compressor, a piston-metal diaphragm compressor, a guided rotor compressor or a linear compressor, for example. In an embodiment, at least one compressor 92,93 is mechanically coupled to the drive train of the FCEV.

In the illustrated embodiment, there is a possibility for the compressed gas to pass through a second heat exchanger 94 to transfer heat to a heat exchange fluid used to regulate the temperature of the fuel cell stack 82. The heat exchange fluid may be water. The FCEV also comprises a radiator 95, so that the heat exchange fluid can also be cooled. A pump 96 is arranged to circulate the heat exchange fluid.

The compressed gas then passes through the first heat exchanger 79, and from there to the tank 71, the supply being regulated by the compressed gas supply valve 76.

The vehicle tank 71 is subject to only minor pressure fluctuations. The risk of delamination of the vessel wall of the tank 71 is thus much reduced, so that the tank 71 need not be replaced as often as a conventional type IV tank.

The invention is not limited to the embodiments described above, which may be varied within the scope of the accompanying claims. For example, although one of the layers of the vessel wall 3,12 has been referred to as a layer 20 of helical windings, this is not intended to be restricted to a particular winding geometry. Various interlace patterns are possible for this layer 20. One or more sensors for monitoring the integrity of the vessel wall 3,12 may be embedded in or applied to the vessel wall 3,12. The ends of the vessel 2,11 may be provided with impact-resistant end caps for further protection. Instead of being comprised in a hydrogen tube trailer, the transportable tank 23 may be installed in a cluster on a ship.

Instead of a fuel cell stack 82, a vehicle fitted with the tank 71 may comprise a hydrogen combustion engine for reacting the hydrogen with air. Some of the exhaust gas will then be supplied to the second compartment of the tank 71. This gas may be compressed by a turbocharger driven by the hydrogen combustion engine, for example.

In an alternative embodiment, one or both of the system 22 for supplying hydrogen and the system 24 for discharging hydrogen comprises a stationary tank of similar construction to the transportable tank 23, to which the transportable tank 23 is connectable. Thus, gas is exchanged between the stationary tank and the transportable tank 23 and the stationary tank acts as a kind of buffer. This has the effect that surplus renewable energy can be used to produce and store hydrogen even at times when no transportable tank 23 is available.

The above description has focused on the use of the tanks 1,10,23 to store compressed hydrogen, because that is a field of application in which the compressed gas is at relatively high pressures (more than e.g. 35 MPa or even more than 38 MPa, but generally below 90 MPa) and there is an increased risk of permeation into composite tank walls. There is no reason, in principle, why the same tank could not be used to transport or store other gases, e.g. methane, if suitable pipeline systems are not available or have reached capacity.

### List of reference numerals

- 1 -: First tank
- 2 -: Vessel
- 3 -: Vessel wall
- 4 -: Boss
- 5 -: First fitting
- 6 -: Second fitting
- 7 -: Barrier
- 8 -: First compartment
- 9 -: Second compartment
- 10 -: Second tank
- 11 -: Vessel
- 12 -: Vessel wall
- 13 -: Boss
- 14 -: First fitting
- 15 -: Second fitting
- 16 -: Barrier
- 17 -: First compartment
- 18 -: Second compartment
- 19 -: Liner
- 20 -: Layer of helical windings
- 21 -: Layer of hoop windings
- 22 -: System for supplying hydrogen
- 23 -: Transportable tank
- 24 -: System for discharging hydrogen
- 25 -: First connector
- 26 -: Second connector
- 27 -: First transportable tank connector
- 28 -: Second transportable tank connector
- 29 -: Controller
- 30 -: Hydrogen supply valve
- 31 -: Gas discharge valve
- 32 -: Pressure sensor
- 33 -: Renewable power source
- 34 -: Electrolyser
- 35 -: Hydrogen compressor
- 36 -: Low-pressure intermediate storage tank
- 37 -: Medium-pressure intermediate storage tank
- 38 -: High-pressure intermediate storage tank
- 39 -: Heat exchanger
- 40 -: Fluid pump
- 41 -: Turboexpander
- 42 -: Generator
- 43 -: Power output
- 44 -: Gas outlet
- 45 -: First connector
- 46 -: Second connector
- 47 -: Controller
- 48 -: Hydrogen discharge valve
- 49 -: Compressed gas supply valve
- 50 -: Pressure sensor
- 51 -: Hydrogen refuelling station
- 52 -: First heat exchanger
- 53 -: Turboexpander
- 54 -: Generator
- 55 -: Fuel cell stack
- 56 -: Electrical output
- 57 -: Electrical grid
- 58 -: Hydrogen outlet
- 59 -: Air inlet
- 60 -: Air cleaner
- 61 -: First compressor
- 62 -: Second compressor
- 63 -: Low-pressure intermediate storage tank
- 64 -: Medium-pressure intermediate storage tank
- 65 -: High-pressure intermediate storage tank
- 66 -: Second heat exchanger
- 67 -: Pump
- 68 -: Radiator
- 69 -: Inverter
- 70 -: Electric vehicle charging station
- 71 -: Tank
- 72 -: Connector
- 73 -: Valve system
- 74 -: Controller
- 75 -: Compressed gas discharge valve
- 76 -: Compressed gas supply valve
- 77 -: Pressure sensor
- 78 -: Compressed gas outlet
- 79 -: First heat exchanger
- 80 -: Turboexpander
- 81 -: Generator
- 82 -: Fuel cell stack
- 83 -: Power conditioner
- 84 -: Electrical motor
- 85 -: Battery
- 86a,b -: Wheels
- 87 -: Torque converter
- 88 -: Differential
- 89 -: Hydrogen outlet
- 90 -: Air inlet
- 91 -: Air cleaner
- 92 -: First compressor
- 93 -: Second compressor
- 94 -: Second heat exchanger
- 95 -: Radiator
- 96 -: Pump

## Claims

1. Tank for storing compressed gas, e.g. compressed hydrogen, comprising:
a vessel (2;11) having an interior closed by a vessel wall (3;12) for containing gas inside the vessel (2;11);
a barrier (7;16), arranged in the interior of the vessel (2;11) and separating gas in a first compartment (8;17) in the interior of the vessel (2;11) from gas in a second compartment (9;18) formed between the barrier (7;16) and an interior surface of the vessel wall (3;12);
at least one first connection device (5;14;27), connectable to a system (22;24) external to the tank, for exchanging gas between that system (22;24) and the first compartment (8;17); and
at least one second connection device (6;15;28), connectable to a system (22;24) external to the tank, for exchanging gas between that system (22;24) and the second compartment (9;18), **characterised in that**
the barrier (7;16) is variable in shape through movement of at least part of the barrier (7;16) towards the interior surface of the vessel wall (3;12) on supply of gas to the first compartment (8;17) in combination with a discharge of gas from the second compartment (9;18).

2. Tank according to claim 1,
wherein at least part of the movable part of the barrier (7;16) is movable into contact with the interior surface of the vessel wall (3;12).

3. Tank according to claim 1 or 2,
wherein the first compartment (17) is enclosed by the barrier (16).

4. Tank according to any one of the preceding claims,
wherein the barrier (7;16) comprises at least a layer comprising a metal foil.

5. Tank according to any one of the preceding claims,
wherein the vessel wall (3;12) comprises at least one fibre-reinforced composite layer (20,21).

6. Tank according to any one of the preceding claims,
wherein the vessel (2;11) has an elongated shape.

7. Tank according to any one of the preceding claims,
further comprising at least one device for maintaining pressure in at least one of the first and second compartments (8,9;17,18) at a certain level by discharging gas from at least one of the first and second compartments (8,9;17,18).

8. System for supplying gas to a tank (1;10;23;71), e.g. a tank (1;10;23;71) according to any one of claims 1-7, for use with a tank (1;10;23;71) comprising:
a vessel (2;11) having an interior closed by a vessel wall (3;12) for containing gas inside the vessel (2;11); and
a barrier (7;16) separating gas in a first compartment (8;17) formed in the interior of the vessel (2;11) from gas in a second compartment (9;18) formed in the interior of the vessel (2;11), at least part of the barrier (7;16) being movable in response to a pressure difference between the gas in the first compartment (8;17) and the gas in the second compartment (9;18) to decrease the pressure difference, wherein the system comprises:
a source of compressed gas;
a system (5,6;14,15;27,28;25,26;45,46) for forming a gas flow connection between the source and one of the first and second compartments (8,9;17,18) to supply the compressed gas to that compartment;
a device (31;48;75) for causing a controlled discharge of gas from the other of the first and second compartments (8,9;17,18) during the supply of the compressed gas; and
a system (29,32;47,50;74,77) for controlling at least one of the supply of the compressed gas and the controlled discharge of gas to maintain pressure in at least one of the first and second compartments (8,9;17,18) within at least a certain range of a certain value.

9. System according to claim 8,
wherein the source of compressed gas comprises an apparatus (34) for producing hydrogen.

10. System according to claim 8 or 9, further comprising:
an expansion turbine (41;53;80);
a generator (42;54;81) driven by the expansion turbine (41;53;80); and
a system for conducting the discharged gas to the expansion turbine (41;53;80).

11. System according to any one of claims 8-10,
further comprising at least one heat exchanger (39;52;79) for exchanging heat between the discharged gas and a further fluid.

12. System according to any one of claims 8-11,
wherein at least one of the system for forming a gas flow connection between the source and one of the first and second compartments (8,9;17,18) to supply the compressed gas to that compartment and the device for causing a controlled discharge of gas from the other of the first and second compartments (8,9;17,18) during the supply of the compressed gas comprises a connector (25,26;45,46) for establishing a temporary gas flow connection between the system and a transportable tank (1;10;23;71), e.g. a transportable tank (1;10;23;71) installed in or loaded onto a vehicle.

13. System for storing a first compressed gas, e.g. compressed hydrogen, comprising:
at least one tank (1;10;23;71), e.g. according to any one of claims 1-7, each tank (1;10;23;71) comprising:
a vessel (2;11) having an interior closed by a vessel wall (3;12) for containing gas inside the vessel (2;11); and
a barrier (7;16) separating gas in a first compartment (8;17) formed in the interior of the vessel (2;11) from gas in a second compartment (9;18) formed in the interior of the vessel (2;11), at least part of the barrier (7;16) being movable in response to a pressure difference between the gas in the first compartment (8;17) and the gas in the second compartment (9;18) to decrease the pressure difference; and
at least one system (22;24) according to any one of claims 8-12 for supplying the first or a second compressed gas to at least one of the tanks (1;10;23;71) to fill the tank with, respectively empty the tank of, the first compressed gas.

14. Vehicle comprising at least one of a tank (1;10;23;71) according to any one of claims 1-7 and a system for storing a first compressed gas according to claim 13.

15. Method of supplying gas to a tank (1;10;23;71), e.g. a tank (1;10;23;71) according to any one of claims 1-7, the tank (1;10;23;71) comprising:
a vessel (2;11) having an interior closed by a vessel wall (3;12) for containing gas inside the vessel (2;11); and
a barrier (7;16) separating gas in a first compartment (8;17) formed in the interior of the vessel (2;11) from gas in a second compartment (9;18) formed in the interior of the vessel (2;11), at least part of the barrier (7;16) being movable in response to a pressure difference between the gas in the first compartment (8;17) and the gas in the second compartment (9;18) to decrease the pressure difference, wherein the method comprises:
supplying compressed gas to one of the first and second compartments (8,9;17,18); and
discharging gas from the other of the first and second compartments (8,9;17,18) during the supply of the compressed gas, wherein pressure in at least one of the first and second compartments (8,9;17,18) is maintained within at least a certain range of a certain pressure.
